# EUROPEAN PATENT APPLICATION

(11) **EP 3 474 142 A1**
(43) Date of publication of application: **24.04.2019**
(21) Application number: 18201649.3
(22) Date of filing: 19.10.2018
(51) Int. Cl.: G06F 11/07, G06F 17/30

(54) **SYSTEM AND METHOD FOR COGNITIVE TROUBLESHOOTING ASSISTANCE**

(30) Priority: 23.10.2017 US 201715790938
(71) Applicant: Honeywell International Inc., Morris Plains, NJ New Jersey 07950 (US)
(72) Inventor: KARTCHNER, Chad, Morris Plains, NJ New Jersey 07950 (US); ABUBAKR, Fnu, Morris Plains, NJ New Jersey 07950 (US); VARADARAJAN, Balaji, Morris Plains, NJ New Jersey 07950 (US)
(74) Representative: Houghton, Mark Phillip

(57) **Abstract**

A computer-implemented method for providing trouble-shooting guidance comprises inputting, by a processor, a plurality of source documents, identifying, by the processor, one or more sections in the source documents that are relevant to pre-defined technical categories through parsing the source documents, and tagging, by the processor, each identified section in the source documents with a unique tag identifier. The method further comprises generating, by the processor, a hierarchy file entry for each identified section that provides a link to that identified section and associates that identified section with the pre-defined technical category for which that identified section was identified, storing, by the processor, the generated hierarchy file entries in a hierarchy file, and generating, by the processor, a dictionary containing a plurality of entries wherein each dictionary entry maps one of the pre-defined technical categories to the generated hierarchy file entries from the hierarchy file related to that technical category.

## Description

### TECHNICAL FIELD

The present invention generally relates to question and answering (Q&A) systems, and more particularly relates to enabling Q&A systems to provide accurate answers to technical questions.

### BACKGROUND

Onboard aircraft troubleshooting tools are available on aircraft through the Central Maintenance Computer (CMC) to assist aircraft maintenance personnel in diagnosing and resolving problems. The onboard tools may not be updated as frequently as maintenance personnel may desire and may include a limited number of reference sources. It may benefit maintenance professionals to have ground-based troubleshooting tools, such as ground-based question and answering (Q&A) systems to supplement the onboard tools. Ground-based troubleshooting tools may be capable of being updated more frequently and potentially without extra effort on the part of the maintenance professional when cloud-based systems are leveraged. Other benefits may include the flexibility to include more types of documents and information than are available on an onboard system.

Cognitive computing systems and artificial intelligence (AI) have been used to provide Q&A systems. Q&A systems may use natural language processing to allow a questioner to ask an unstructured question, convert the unstructured question into a machine understandable query, and retrieve an answer to the question from source documents. Q&A systems however may struggle with providing accurate answers for many technical questions from technical or proprietary documents such as technical and maintenance documents used by aircraft maintenance personnel.

Hence, it is desirable to provide systems and methods for enabling Q&A systems to provide accurate answers to technical questions from technical source documents. Furthermore, other desirable features and characteristics of the present invention will become apparent from the subsequent detailed description and the appended claims, taken in conjunction with the accompanying drawings and the foregoing technical field and background.

### SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, a computer-implemented method for generating a dictionary for providing trouble-shooting guidance is disclosed. The method includes inputting, by a processor, a plurality of source documents from non-transient computer readable media, identifying, by the processor, one or more sections in the source documents that are relevant to pre-defined technical categories through parsing the source documents, tagging, by the processor, each identified section in the source documents with a unique tag identifier, and storing, by the processor, the tagged source documents on the non-transient computer readable media. The method further includes generating, by the processor, a hierarchy file entry for each identified section that provides a link to that identified section and associates that identified section with the pre-defined technical category for which that identified section was identified, storing, by the processor, the generated hierarchy file entries in a hierarchy file on the non-transient computer readable media, generating, by the processor, a dictionary containing a plurality of entries wherein each dictionary entry maps one of the pre-defined technical categories to the generated hierarchy file entries from the hierarchy file related to that technical category, and storing, by the processor, the dictionary on the non-transient computer readable media.

In another embodiment, a system for generating a dictionary for providing troubleshooting content from a data store is disclosed. The system includes one or more processors configured by programming instructions encoded on non-transient computer readable media. The system is configured to input a plurality of source documents from non-transient computer readable media, identify one or more sections in the source documents that are relevant to pre-defined technical categories through parsing the source documents, tag each identified section in the source documents with a unique tag identifier, store the tagged source documents on the non-transient computer readable media, generate a hierarchy file entry for each identified section that provides a link to that identified section and associates that identified section with the pre-defined technical category for which that identified section was identified, store the generated hierarchy file entries in a hierarchy file on the non-transient computer readable media, generate a dictionary containing a plurality of entries wherein each dictionary entry maps one of the pre-defined technical categories to the generated hierarchy file entries from the hierarchy file related to that technical category, and store the dictionary on the non-transient computer readable media.

In another embodiment, a system for providing troubleshooting content from a data store is disclosed. The system includes one or more processors configured by programming instructions encoded on non-transient computer readable media. The system is configured to query a dictionary stored on non-transient computer readable media for content from tagged source documents stored on non-transient computer readable media and related to a fault code in response to a maintenance question from a user device received over a network. The dictionary includes a plurality of entries wherein each entry maps one of a plurality of technical categories to one or more hierarchy file entries from a hierarchy file stored on the non-transient computer readable media. The hierarchy file includes a plurality of hierarchy file entries stored in the hierarchy file, wherein each hierarchy file entry corresponds to a unique tag identifier, provides a link to an identified section in a tagged source document tagged with the unique identifier, and associates the its identified section with a relevant technical category. The system is further configured to retrieve a dictionary entry that is responsive to the query and that contains one or more links to one or more sections in the tagged source documents that are related to the technical category, retrieve content accessible via the one or more links from the tagged source documents, and provide the retrieved content to the user device over the network.

Furthermore, other desirable features and characteristics will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 is a block diagram depicting an example environment in which an example question and answer (Q&A) system may be deployed, in accordance with some embodiments;
FIG. 2 is a process flow chart depicting an example process in an example Q&A server, in accordance with some embodiments;
FIG. 3 is a block diagram depicting an example system for generating tagged source files and a dictionary that may be used by an example Q&A system from source documents, in accordance with some embodiments;
FIG. 4 is a block diagram illustrating an example parser module, in accordance with some embodiments;
FIG. 5 is a process flow chart depicting an example process in an example parser module, in accordance with some embodiments;
FIG. 6A is a block diagram depicting another example parser module, in accordance with some embodiments;
FIG. 6B is a block diagram depicting another example parser module, in accordance with some embodiments;
FIG. 7 is a block diagram illustrating the operation of an example indexing module, in accordance with some embodiments; and
FIG. 8 is a process flow chart depicting an example process in an example indexing module, in accordance with some embodiments; and
FIG. 9 is a process flow chart depicting an example process for providing troubleshooting guidance, in accordance with some embodiments.

### DETAILED DESCRIPTION

The following detailed description is merely exemplary in nature and is not intended to limit the application and uses. Furthermore, there is no intention to be bound by any expressed or implied theory presented in the preceding technical field, background, summary, or the following detailed description. As used herein, the term "module" refers to any hardware, software, firmware, electronic control component, processing logic, and/or processor device, individually or in any combination, including without limitation: application specific integrated circuit (ASIC), a field-programmable gate-array (FPGA), an electronic circuit, a processor (shared, dedicated, or group) and memory that executes one or more software or firmware programs, a combinational logic circuit, and/or other suitable components that provide the described functionality.

Embodiments of the present disclosure may be described herein in terms of functional and/or logical block components and various processing steps. It should be appreciated that such block components may be realized by any number of hardware, software, and/or firmware components configured to perform the specified functions. For example, an embodiment of the present disclosure may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments of the present disclosure may be practiced in conjunction with any number of systems, and that the systems described herein is merely exemplary embodiments of the present disclosure.

For the sake of brevity, conventional techniques related to signal processing, data transmission, signaling, control, database systems, and other functional aspects of the systems (and the individual operating components of the systems) may not be described in detail herein. Furthermore, the connecting lines shown in the various figures contained herein are intended to represent example functional relationships and/or physical couplings between the various elements. It should be noted that many alternative or additional functional relationships or physical connections may be present in an embodiment of the present disclosure.

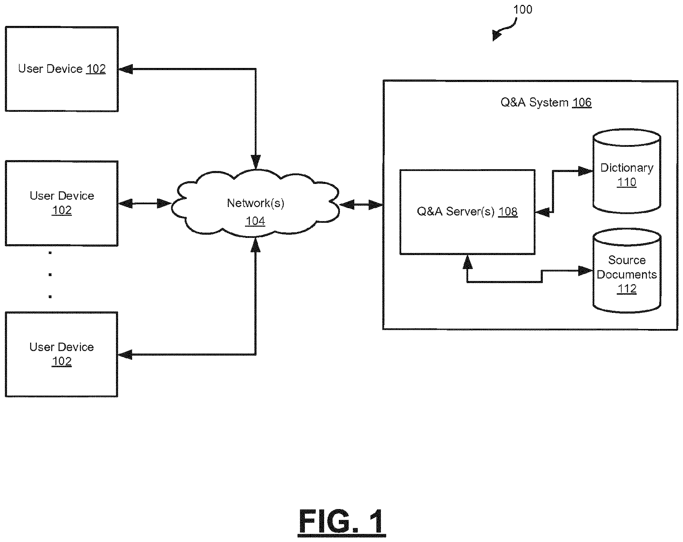

FIG. 1 is a block diagram depicting an example environment 100 in which an example question and answer (Q&A) system may be deployed. In the example environment 100, one or more users using user devices 102, such as smart phones, tablets, laptops, etc., may, via a network 104, access a Q&A system 106 to receive information content, such as textual instructions and/or images, in response to questions. The example Q&A system 106 is configured to provide maintenance/repair information, such as maintenance/repair information that may be helpful in diagnosing and remedying faults identified through equipment fault codes.

The example Q&A system 106 includes a Q&A server 108 that is configured to receive questions from a user device 102, search for answers to the question, and provide the answers to the user device 102. The example Q&A server 108 is configured to use cognitive and artificial intelligence (AI) techniques to convert a question, such as an aircraft maintenance/repair question, into a query for a dictionary 110, and query the dictionary 110 for content from source documents 112 related to a fault code in response to the maintenance/repair question from a user device 102. The example dictionary 110 includes a plurality of entries wherein each entry maps a technical category such as a fault code and/or part identifier (*e*.*g*., part number, name or code) to one or more links to different sections in source documents 112. Each linked to section in this example is relevant to the technical category, *e*.*g*., resolving a fault code and/or related to a part identifier.

The example Q&A server 108 is further configured to retrieve a dictionary entry that is responsive to the query, retrieve content accessible via the one or more links associated with the dictionary entry from the source documents 112, and provide the retrieved content to the user device 102. Communication between a user device 102 and the example Q&A server 108 may be App-based (*e*.*g*., using an application program executing on the user device), browser based, or both.

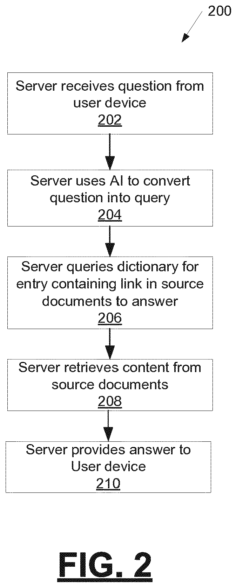

FIG. 2 is a process flow chart depicting an example process 200 in an example Q&A server. The order of operation within the process is not limited to the sequential execution as illustrated in the figure, but may be performed in one or more varying orders as applicable and in accordance with the present disclosure.

The example process 200 includes a Q&A server receiving a question from a user via a user device over a network (operation 202). Communication between the user device and the example Q&A server may be App-based (*e*.*g*., using an application program executing on the user device), browser based, or both.

The example process 200 includes the server converting the question into a query, for example, using AI (operation 204) and querying (or searching) a dictionary for an entry containing a link to the section in a source document containing an answer to the question (operation 206). The example dictionary contains a plurality of entries wherein each entry identifies a technical category such as a part identifier or trouble code and provides links to sections in the source documents that are related to the technical category. The server, for example, using AI can convert the question into a query involving the part identifier or trouble code. The server, through searching the dictionary, identifies the dictionary entry related to a specific part identifier or trouble code. The example process 200 further includes the server retrieving content from the source documents associated with the part identifier or trouble code identified in the dictionary entry (operation 208). The server may then provide the retrieved content to the requesting user device (operation 210).

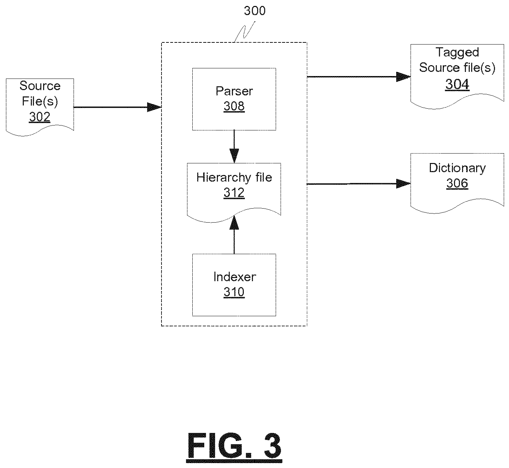

FIG. 3 is a block diagram depicting an example system 300 for generating from source documents 302 tagged source files 304 and a dictionary 306 that may be used by an example Q&A system. An example Q&A system may query a dictionary for a technical category such as a trouble code or part identifier, locate a dictionary entry corresponding to the technical category, retrieve links to sections in the tagged source files corresponding to the technical category, and retrieve the content from the tagged source files accessible via the links.

The example system 300 includes at least one processor and a computer-readable storage device or media. The processor may be any custom-made or commercially available processor, a central processing unit (CPU), a graphics processing unit (GPU), an application specific integrated circuit (ASIC), a field programmable gate array (FPGA), an auxiliary processor among several processors associated with the system 300, a semiconductor-based microprocessor (in the form of a microchip or chip set), any combination thereof, or generally any device for executing instructions. The computer readable storage device or media may include volatile and nonvolatile storage in read-only memory (ROM), random-access memory (RAM), and keep-alive memory (KAM), for example. KAM is a persistent or non-volatile memory that may be used to store various operating variables while the processor is powered down. The computer-readable storage device or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable instructions, used by the system 300.

The processors and memory of the example system 300 are configured by the executable programming instructions to provide a parser 308 and an indexer 310. The example parser 308 is configured by programming instructions to parse source documents, identify sections of the source documents that correspond to pre-determined categories, and in some cases, identify sub-sections of the source documents that correspond to pre-determined sub-categories, tag the sections and sub-sections in the source document with unique tags, save the tagged source documents, and store links to the sections and sub-sections in a hierarchy file 312. The example indexer 310 is configured to search through the hierarchy file 312 and create an index that maps to each pre-determined category all links in the hierarchy file 312 related to the pre-determined category. In this example, the pre-determined categories comprise different fault codes and product identifiers (*e*.*g*., part number). Improvements to the operation of a computer, such as one employing a Q&A system, may be achieved using the example parser 308 and example indexer 310. By tagging sections and sub-sections in the source document beforehand, data access later by the computer (*e*.*g*., Q&A system) is faster. Consequently, operation of the computer can be improved.

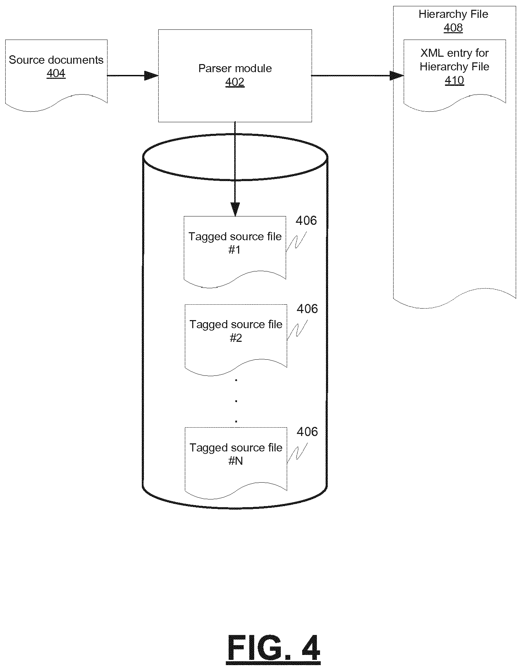

FIG. 4 is a block diagram illustrating an example parser module 402. The example parser module 402 receives source documents 404 as inputs, parses the source documents 404, identifies sections of the source documents 404 that correspond to pre-determined categories and, in some cases, identifies sub-sections of the source documents 404 that correspond to pre-determined sub-categories, tags the sections and sub-subsections with unique tags, saves the tagged source documents 406, and store links to the sections and sub-sections in a hierarchy file 408. The example hierarchy file 408 contains entries that link categories (*e*.*g*., fault code), and in some cases subcategories (*e*.*g*., meaning, symptoms, troubleshooting steps), to text and figures in tagged source file. The example hierarchy file 408 includes an XML entry 410 for each unique tag that identifies the category (or sub-category to which the tag relates) and includes links to the sections and sub-sections associated with the unique tag.

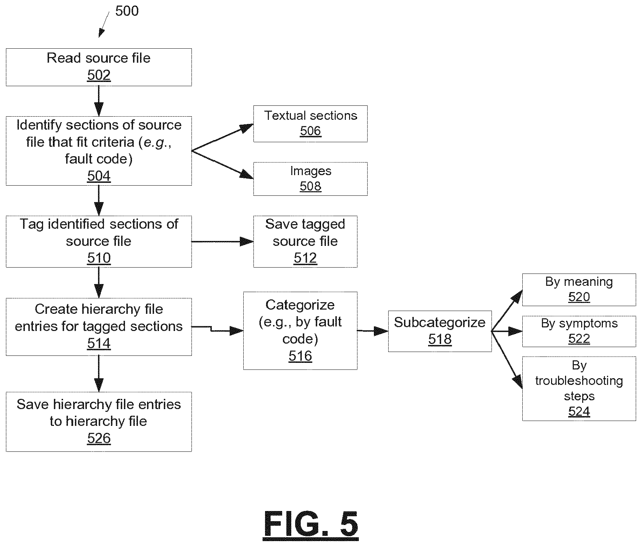

FIG. 5 is a process flow chart depicting an example process 500 in an example parser module. The order of operation within the process is not limited to the sequential execution as illustrated in the figure, but may be performed in one or more varying orders as applicable and in accordance with the present disclosure.

The example process 500 includes reading source files (operation 502). The source files may include documents (*e*.*g*., maintenance documents) formatted as pdf files. The example process 500 further includes identifying sections of the source file that relate to a pre-defined category (*e*.*g*., fault code) and in some cases sub-category (*e*.*g*., meaning of a fault code, the symptoms of a fault code, or troubleshooting steps for a fault code) (operation 504). Sections in the source file may be textual sections (506) or sections consisting of images (508). Identifying the sections may be performed iteratively and may include identifying one or more textual sections in a first iteration and identifying one or more images in a second iteration that follows the first iteration. The example process 500 further includes tagging each identified section in the source documents with a unique tag identifier (operation 510) and saving the tagged source files (operation 512).

The example process 500 further includes creating a hierarchy file entry for each tagged section (operation 514). The hierarchy file entry may be an entry in an XML format. The hierarchy file entry categorizes the section, for example, by fault code (operation 516). The hierarchy file entry may also subcategorize the section (operation 518), for example, by meaning (operation 520), by symptoms (operation 522), or by troubleshooting steps (operation 524). The example process 500 further includes saving the hierarchy files entries in a hierarchy file (operation 526).

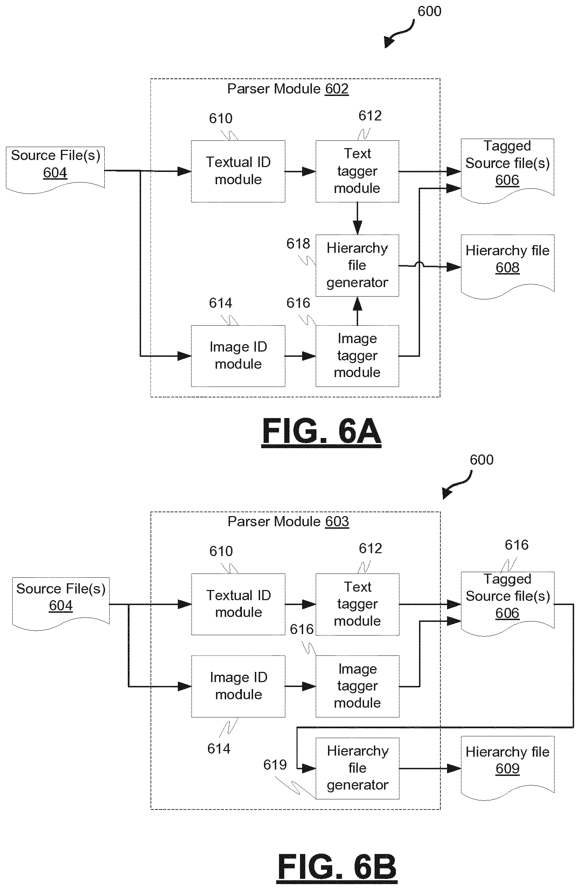

FIG. 6A is a block diagram depicting another example parser module 602. The example parser module 602 includes at least one processor and a computer-readable storage device or media. The example parser module 602 is configured by programming instructions encoded in the computer-readable storage device or media to receive source documents 604 as inputs, parse the source documents 604, identify sections of the source documents 604 that correspond to pre-determined categories, and in some cases, identify sub-sections of the source documents 604 that correspond to pre-determined sub-categories, tag the sections and sub-sections with unique tags, save the tagged source documents 606, and store links to the sections and sub-sections in a hierarchy file 608.

The example parser module 602 includes a textual ID module 610, a text tagger module 612, an image ID module 614, an image tagger module 616, and a hierarchy file generator module 618. The textual ID module 610 is configured to read a plurality of source documents 604 and identify one or more textual sections (and subsections in some cases) in the source document that are relevant to pre-determined categories (*e*.*g*., resolving a fault code), and pre-determined sub-categories (*e*.*g*., the meaning of a fault code, the symptoms of a fault code, or troubleshooting steps for a fault code), through parsing the source documents. The text tagger module 612 is configured to tag each identified section and subsection in the source documents with a unique tag identifier.

The image ID module 614 is configured to read the plurality of source documents and identify one or more images in the source document that are relevant to pre-determined categories (*e*.*g*., a fault code or part identifier), and pre-determined sub-categories (*e*.*g*., the meaning of a fault code, the symptoms of a fault code, or troubleshooting steps for a fault code). The image ID module 614 may accomplish this by reading the source file after it has been tagged with tags from the text tagger module 612. The image tagger module 616 is configured to tag each identified image in the source documents with a unique tag identifier. The result of the tagging by the text tagger module 612 and the image tagger module 616 is the generation of the tagged source file 606.

The hierarchy file generator module 618 is configured to generate a hierarchy file entry for each unique tag identifier. Each hierarchy file entry includes a link to the identified section in the tagged source documents that is tagged with the unique tag identifier with which the hierarchy file is associated. Each hierarchy file entry also includes an indicator that associates the unique tag identifier with a category and/or subcategory designation. The hierarchy file generator module 618 is also configured to store the generated hierarchy file entries in the hierarchy file 608.

In this example, the hierarchy file generator module 618 is configured to generate a hierarchy file entry each time the text tagger module generates a unique tag identifier and tags the source file 606 with the unique tag identifier. The example hierarchy file generator module 618 is further configured to generate a hierarchy file entry each time the image tagger module generates a unique tag identifier and tags the source file 606 with the unique tag identifier and stitch these entries into the hierarchy file 608. In this example, the tagging of the source file is performed iteratively with the text tagger module generating a unique tag identifier and tagging the source file 606 with the unique tag identifiers during a first iteration and the image tagger module generating a unique tag identifier and tagging the source file 606 with the unique tag identifiers during a subsequent iteration.

FIG. 6B is a block diagram depicting another example parser module 603. The example parser module 603 includes at least one processor and a computer-readable storage device or media. The example parser module 603 is configured by programming instructions encoded in the computer-readable storage device or media to receive source documents 604 as inputs, parse the source documents 604, identify sections of the source documents 604 that correspond to pre-determined categories, and in some cases, identify sub-sections of the source documents 604 that correspond to pre-determined sub-categories, tag the sections and sub-sections with unique tags, save the tagged source documents 606, and store links to the sections and sub- sections in a hierarchy file 609.

The example parser module 603 includes a textual ID module 610, a text tagger module 612, an image ID module 614, an image tagger module 616, and a hierarchy file generator module 619. The textual ID module 610 is configured to read a plurality of source documents 604 and identify one or more textual sections (and subsections in some cases) in the source document that are relevant to pre-determined categories (*e*.*g*., resolving a fault code), and pre-determined sub-categories (*e*.*g*., the meaning of a fault code, the symptoms of a fault code, or troubleshooting steps for a fault code), through parsing the source documents. The text tagger module 612 is configured to tag each identified section and subsection in the source documents with a unique tag identifier.

The image ID module 614 is configured to read the plurality of source documents and identify one or more images in the source document that are relevant to pre-determined categories (*e*.*g*., a fault code or part identifier), and pre-determined sub-categories (*e*.*g*., the meaning of a fault code, the symptoms of a fault code, or troubleshooting steps for a fault code). The image ID module 614 may accomplish this by reading the source file after it has been tagged with tags from the text tagger module 612. The image tagger module 616 is configured to tag each identified image in the source documents with a unique tag identifier. The result of the tagging by the text tagger module 612 and the image tagger module 616 is the generation of the tagged source file 606.

The hierarchy file generator module 619 is configured to generate a hierarchy file entry for each unique tag identifier. Each hierarchy file entry includes a link to the identified section in the tagged source documents that is tagged with the unique tag identifier with which the hierarchy file is associated. Each hierarchy file entry also includes an indicator that associates the unique tag identifier with a category and/or subcategory designation. The hierarchy file generator module 619 is also configured to store the generated hierarchy file entries in the hierarchy file 609.

In this example, the hierarchy file generator module 619 is configured to generate a hierarchy file entry after the tagging of the source file is complete. In this example, the tagging of the source file is performed iteratively with the text tagger module generating a unique tag identifier and tagging the source file 606 with the unique tag identifiers during a first iteration and the image tagger module generating a unique tag identifier and tagging the source file 606 with the unique tag identifiers during a subsequent iteration. In this example, the hierarchy file generator module 618 is configured to read the tagged source file 606 and generate the hierarchy file 609.

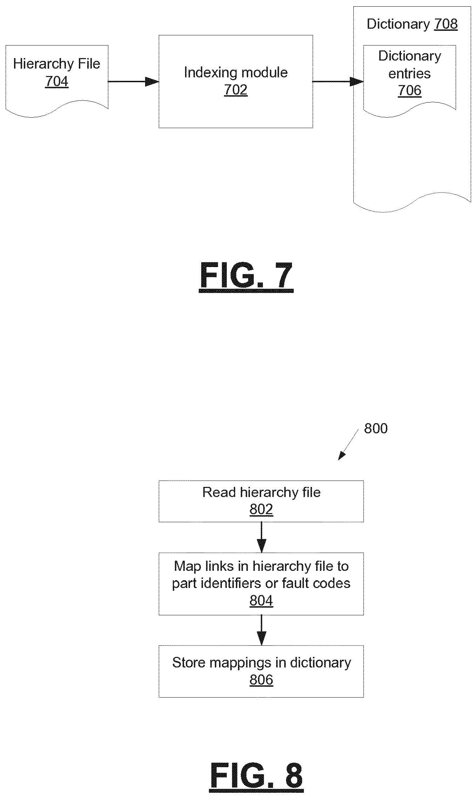

FIG. 7 is a block diagram illustrating the operation of an example indexing module 702. The example indexing module 702 includes at least one processor and a computer-readable storage device or media. The example indexing module 702 is configured by programming instructions encoded in the computer-readable storage device or media to receive a hierarchy file 704 as an input, map links in the hierarchy file 702 to categories (*e*.*g*., fault code or part identifier) and, in some cases, to subcategories (*e*.*g*., the meaning of a fault code, the symptoms of a fault code, or troubleshooting steps for a fault code), and store the mappings as dictionary entries 706 in a dictionary 708.

FIG. 8 is a process flow chart depicting an example process 800 in an example indexing module. The order of operation within the process is not limited to the sequential execution as illustrated in the figure, but may be performed in one or more varying orders as applicable and in accordance with the present disclosure.

The example process 800 is directed to generating, by the processor, a dictionary containing a plurality of entries wherein each entry maps a technical category such as a fault code or part identifier (*e*.*g*., number, name or code) to one or more of the generated hierarchy file entries from the hierarchy file. The example process 800 accomplishes this by reading the hierarchy file (operation 802) and mapping links in the hierarchy file to technical categories such as fault codes or part number identifiers (operation 804). Mapping the links may include indexing the hierarchy file to generate a single dictionary entry for the hierarchy file entries associated with the same technical category. The example process 800 further includes storing the mappings in a dictionary (operation 806).

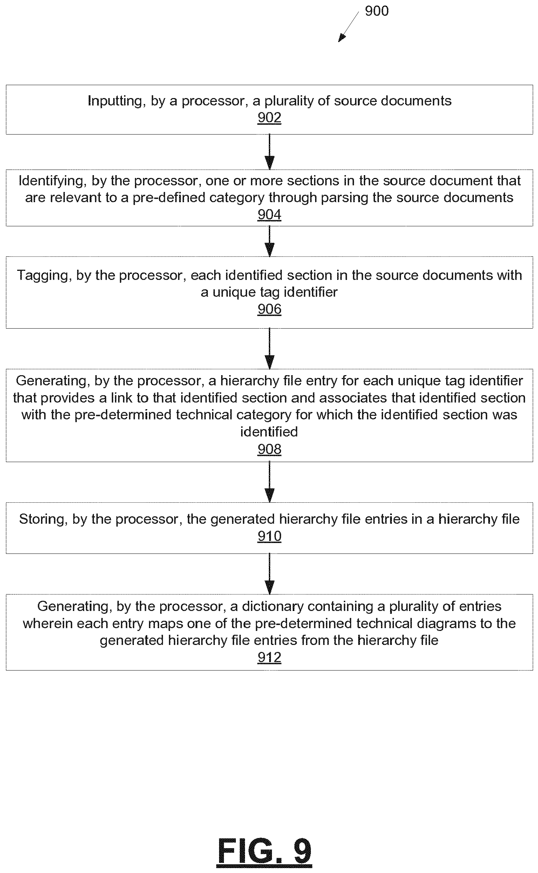

FIG. 9 is a process flow chart depicting an example process 900 for providing troubleshooting guidance. The order of operation within the process is not limited to the sequential execution as illustrated in the figure, but may be performed in one or more varying orders as applicable and in accordance with the present disclosure. The example process 900 includes inputting, by a processor, a plurality of source documents (operation 902). The source documents may include maintenance documents formatted as pdf files.

The example process 900 further includes identifying, by the processor, one or more sections in the source documents that are relevant to a pre-defined category, such as resolving a fault code, through parsing the source documents (operation 904). Identifying may also include identifying one or more subsections in an identified section that are relevant to a pre-defined sub-category, such as the meaning of a fault code, the symptoms of a fault code, or troubleshooting steps for a fault code. Identifying one or more sections may include identifying one or more textual sections. Identifying one or more sections may further include identifying one or more images. Identifying may be performed iteratively and may include identifying one or more textual sections in a first iteration and identifying one or more images in a second iteration that follows the first iteration.

The example process 900 further includes tagging, by the processor, each identified section in the source documents with a unique tag identifier (operation 906). Tagging may further include tagging each identified subsection with a unique tag identifier.

The example process 900 further includes generating, by the processor, a hierarchy file entry for each identified section that provides a link to that identified section with the pre-defined technical category for which that identified section was identified (operation 908). This may further comprise including in one or more of the hierarchy file entries an indication that an identified subsection includes information regarding a sub-category such as the meaning of a fault code, the symptoms of a fault code, or troubleshooting steps for a fault code. Generating a hierarchy file entry for each identified section may include generating an XML entry for each identified section. The example process 900 further includes storing, by the processor, the generated hierarchy file entries in a hierarchy file (operation 910).

The example process 900 further includes generating, by the processor, a dictionary containing a plurality of entries wherein each dictionary entry maps a fault code or part identifier (e.g., number, name or code) to one of the pre-defined technical categories to the generated hierarchy file entries from the hierarchy file related to that technical category (operation 912). Generating a dictionary may include indexing the hierarchy file to generate a single dictionary entry for the hierarchy file entries associated with the same technical category.

The dictionary and tagged source files generated through the example process 900 may be used by a Q&A system that performs a process including querying, responsive to a question from a user device, the dictionary for content from the source documents related to the technical category; retrieving a dictionary entry that is responsive to the query and that contains one or more links to one or more sections in the tagged source documents that are related to the technical category; retrieving content accessible via the one or more links from the tagged source documents; and providing the retrieved content to the user device.

Described herein are techniques for enabling a Q&A system to more accurately provide technical answers to technical questions. The techniques described herein, in some examples, results in the generation of a hierarchy file that associates pre-defined categories and sub-categories with links to sections and sub-sections in technical source documents related to the predefined categories and sub-categories. Improvements to the operation of a computer, such as one employing a Q&A system, may be achieved using the techniques described herein. By tagging sections and sub-sections in a source document beforehand, data access later by the computer (*e*.*g*., Q&A system) is made faster. Consequently, operation of the computer can be improved.

In one embodiment, a computer-implemented method for generating a dictionary for providing trouble-shooting guidance is disclosed. The method comprises inputting, by a processor, a plurality of source documents from non-transient computer readable media, identifying, by the processor, one or more sections in the source documents that are relevant to pre-defined technical categories through parsing the source documents, tagging, by the processor, each identified section in the source documents with a unique tag identifier, and storing, by the processor, the tagged source documents on the non-transient computer readable media. The method further comprises generating, by the processor, a hierarchy file entry for each identified section that provides a link to that identified section and associates that identified section with the pre-defined technical category for which that identified section was identified, storing, by the processor, the generated hierarchy file entries in a hierarchy file on the non-transient computer readable media, generating, by the processor, a dictionary containing a plurality of entries wherein each dictionary entry maps one of the pre-defined technical categories to the generated hierarchy file entries from the hierarchy file related to that technical category, and storing, by the processor, the dictionary on the non-transient computer readable media.

These aspects and other embodiments may include one or more of the following features. The pre-defined technical categories may comprise fault codes and/or part identifiers. Identifying may further comprise identifying one or more subsections in an identified section that are relevant to pre-defined technical sub-categories. The pre-defined technical sub-categories may comprise the meaning of a fault code, the symptoms of a fault code, or troubleshooting steps for a fault code. The method may further comprise including in one or more of the hierarchy file entries an indication that an identified subsection includes information regarding the meaning of a fault code, the symptoms of a fault code, or troubleshooting steps for a fault code. Generating a hierarchy file entry for identified section may comprise generating an XML entry for each identified section. The method may further comprise: responsive to a technical question from a user device received over a network, querying the dictionary for content from the source documents related to a technical issue, retrieving a dictionary entry that is responsive to the query and that contains one or more links to one or more sections in the tagged source documents that are related to the technical issue, retrieving content accessible via the one or more links from the tagged source documents, and providing the retrieved content to the user device over the network. Generating a dictionary may comprise indexing the hierarchy file to generate a single dictionary entry for the hierarchy file entries associated with the same technical category. The source documents may comprise maintenance documents formatted as pdf files. Identifying one or more sections may comprise identifying one or more textual sections. Identifying one or more sections may further comprise identifying one or more images. Identifying one or more sections may comprise identifying one or more textual sections in a first iteration and identifying one or more images in a second iteration that follows the first iteration.

In another embodiment, a system for generating a dictionary for providing troubleshooting content from a data store is disclosed. The system comprises one or more processors configured by programming instructions encoded on non-transient computer readable media. The system is configured to input a plurality of source documents from non-transient computer readable media, identify one or more sections in the source documents that are relevant to pre-defined technical categories through parsing the source documents, tag each identified section in the source documents with a unique tag identifier, store the tagged source documents on the non-transient computer readable media, generate a hierarchy file entry for each identified section that provides a link to that identified section and associates that identified section with the pre-defined technical category for which that identified section was identified, store the generated hierarchy file entries in a hierarchy file on the non-transient computer readable media, generate a dictionary containing a plurality of entries wherein each dictionary entry maps one of the pre-defined technical categories to the generated hierarchy file entries from the hierarchy file related to that technical category, and store the dictionary on the non-transient computer readable media.

These aspects and other embodiments may include one or more of the following features. Configured to identify may comprise configured to identify one or more subsections in an identified section that are relevant to pre-defined technical sub-categories. The pre-defined technical sub-categories may comprise the meaning of a fault code, the symptoms of a fault code, or troubleshooting steps for a fault code. The system may be further configured to include in one or more of the hierarchy file entries an indication that an identified subsection includes information regarding the meaning of a fault code, the symptoms of a fault code, or troubleshooting steps for a fault code. Configured to generate a dictionary may comprise configured to index the hierarchy file to generate a single dictionary entry for the hierarchy file entries associated with the same technical issue. Configured to identify one or more sections may comprise configured to identify one or more textual sections and one or more images. Configured to identify one or more sections may comprise configured to identify one or more textual sections in a first iteration and configured to identify one or more images in a second iteration that follows the first iteration.

In another embodiment, a system for providing troubleshooting content from a data store is disclosed. The system comprises one or more processors configured by programming instructions encoded on non-transient computer readable media. The system is configured to query a dictionary stored on non-transient computer readable media for content from tagged source documents stored on non-transient computer readable media and related to a fault code in response to a maintenance question from a user device received over a network. The dictionary comprises a plurality of entries wherein each entry maps one of a plurality of technical categories to one or more hierarchy file entries from a hierarchy file stored on the non-transient computer readable media. The hierarchy file comprises a plurality of hierarchy file entries stored in the hierarchy file, wherein each hierarchy file entry corresponds to a unique tag identifier, provides a link to an identified section in a tagged source document tagged with the unique identifier, and associates the its identified section with a relevant technical category. The system is further configured to retrieve a dictionary entry that is responsive to the query and that contains one or more links to one or more sections in the tagged source documents that are related to the technical category, retrieve content accessible via the one or more links from the tagged source documents, and provide the retrieved content to the user device over the network.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A computer-implemented method for generating a dictionary for providing troubleshooting guidance, the method comprising:
inputting, by a processor, a plurality of source documents from non-transient computer readable media;
identifying, by the processor, one or more sections in the source documents that are relevant to pre-defined technical categories through parsing the source documents;
tagging, by the processor, each identified section in the source documents with a unique tag identifier;
storing, by the processor, the tagged source documents on the non-transient computer readable media;
generating, by the processor, a hierarchy file entry for each identified section that provides a link to that identified section and associates that identified section with the pre-defined technical category for which that identified section was identified;
storing, by the processor, the generated hierarchy file entries in a hierarchy file on the non-transient computer readable media;
generating, by the processor, a dictionary containing a plurality of entries wherein each dictionary entry maps one of the pre-defined technical categories to the generated hierarchy file entries from the hierarchy file related to that technical category; and
storing, by the processor, the dictionary on the non-transient computer readable media.

2. The method of claim 1, wherein:
identifying further comprises identifying one or more subsections in an identified section that are relevant to pre-defined technical sub-categories; and
the pre-defined technical sub-categories comprise the meaning of a fault code, the symptoms of a fault code, or troubleshooting steps for a fault code.

3. The method of claim 2, further comprising including in one or more of the hierarchy file entries an indication that an identified subsection includes information regarding the meaning of a fault code, the symptoms of a fault code, or troubleshooting steps for a fault code.

4. The method of claim 1 further comprising:
responsive to a technical question from a user device received over a network, querying the dictionary for content from the source documents related to a technical issue;
retrieving a dictionary entry that is responsive to the query and that contains one or more links to one or more sections in the tagged source documents that are related to the technical issue;
retrieving content accessible via the one or more links from the tagged source documents; and
providing the retrieved content to the user device over the network.

5. The method of claim 1, wherein generating a dictionary comprises indexing the hierarchy file to generate a single dictionary entry for the hierarchy file entries associated with the same technical category.

6. The method of claim 1, wherein identifying one or more sections comprises identifying one or more textual sections in a first iteration and identifying one or more images in a second iteration that follows the first iteration.

7. A system for generating a dictionary for providing troubleshooting content from a data store, the system comprising one or more processors configured by programming instructions encoded on non-transient computer readable media, the system configured to:
input a plurality of source documents from non-transient computer readable media;
identify one or more sections in the source documents that are relevant to pre-defined technical categories through parsing the source documents;
tag each identified section in the source documents with a unique tag identifier;
store the tagged source documents on the non-transient computer readable media;
generate a hierarchy file entry for each identified section that provides a link to that identified section and associates that identified section with the pre-defined technical category for which that identified section was identified;
store the generated hierarchy file entries in a hierarchy file on the non-transient computer readable media;
generate a dictionary containing a plurality of entries wherein each dictionary entry maps one of the pre-defined technical categories to the generated hierarchy file entries from the hierarchy file related to that technical category; and
store the dictionary on the non-transient computer readable media.

8. The system of claim 7, wherein configured to generate a dictionary comprises configured to index the hierarchy file to generate a single dictionary entry for the hierarchy file entries associated with the same technical category.

9. The system of claim 7, wherein configured to identify one or more sections comprises configured to identify one or more textual sections and one or more images.

10. A system for providing troubleshooting content from a data store, the system comprising one or more processors configured by programming instructions encoded on non-transient computer readable media, the system configured to:
query a dictionary stored on non-transient computer readable media for content from tagged source documents stored on non-transient computer readable media and related to a technical category in response to a maintenance question from a user device received over a network, the dictionary comprising a plurality of entries wherein each entry maps a one of a plurality of technical categories to one or more hierarchy file entries from a hierarchy file stored on the non-transient computer readable media, the hierarchy file comprising a plurality of hierarchy file entries stored in the hierarchy file, wherein each hierarchy file entry corresponds to a unique tag identifier, provides a link to an identified section in a tagged source document tagged with the unique identifier, and associates its identified section with a relevant technical category;
retrieve a dictionary entry that is responsive to the query and that contains one or more links to one or more sections in the tagged source documents that are related to the technical category;
retrieve content accessible via the one or more links from the tagged source documents; and
provide the retrieved content to the user device over the network.
